# EUROPEAN PATENT APPLICATION

(11) **EP 4 366 183 A1**
(43) Date of publication of application: **08.05.2024**
(21) Application number: 22205277.1
(22) Date of filing: 03.11.2022
(51) Int. Cl.: H04B 7/0413, H04B 7/06, H04B 7/10

(54) **TRANSFER OF MULTIPLE DATA STREAMS USING MULTIPLE ANTENNA ELEMENTS**

(71) Applicant: Nokia Technologies Oy, 02610 Espoo (FI)
(72) Inventor: NIELSEN, Kim, Storvorde (DK); SVENDSEN, Simon, Aalborg (DK)
(74) Representative: Swindell & Pearson Limited

(57) **Abstract**

An apparatus comprising:
first data stream interfaces;
second data stream interfaces;
first ports for antenna elements;
second ports for antenna elements;
a switching arrangement configured to couple:
flexible, exclusive groups of first ports to first data stream interfaces and
flexible, exclusive groups of second ports to second data stream interfaces.

## Description

### TECHNOLOGICAL FIELD

Examples of the disclosure relate to transfer of multiple data streams using multiple antenna elements.

### BACKGROUND

It is desirable to transfer multiple data streams simultaneously. This can be achieved using multiple antenna elements.

In N x M multiple input multiple output (MIMO), N antenna ports can be transmitted into a channel and M antenna ports can be received from the channel.

A single data stream (MIMO layer) can be connected to the N specific multiple antenna ports for transmission (transmission diversity) and the M specific antenna ports for reception (reception diversity).

Data can be split into independent data streams that are transferred, in parallel, via specific antenna ports (spatial multiplexing). The maximum number of data streams is the lesser of N or M.

Where a data stream is transferred via multiple different antenna ports spatially diversity can be performed by using spatially separated antenna elements.

Where a data stream is transferred via multiple different antenna ports beam-forming can be performed by applying different phase and gain control in association with each antenna port.

In carrier aggregation, each data stream (component carrier) is transferred in parallel using different frequency resources.

Where dual-polarized antenna elements are used, each antenna element has a first port and a second port.

### BRIEF SUMMARY

It is desirable to provide an apparatus that can transfer data streams simultaneously using multiple antenna elements, where the selection of an association of data streams to antenna elements is flexible.

It is desirable to provide an apparatus for user equipment that can perform downlink 2x2 MIMO.

According to various, but not necessarily all, examples there is provided an apparatus comprising:
first data stream interfaces;
second data stream interfaces;
first ports for antenna elements;
second ports for antenna elements;
a switching arrangement configured to couple:
   flexible, exclusive groups of first ports to first data stream interfaces and
   flexible, exclusive groups of second ports to second data stream interfaces.

In some, but not necessarily all examples, the switching arrangement configured to couple: different flexible, exclusive groups of first ports to each of at least some of the first data stream interfaces and different flexible, exclusive groups of second ports to each of at least some of the second data stream interfaces.

In some, but not necessarily all examples, the switching arrangement is configured to change a number of first ports coupled to a first data stream interface.

In some, but not necessarily all examples, the switching arrangement is configured to change a number of second ports coupled to a second data stream interface.

In some, but not necessarily all examples, the switching arrangement is configured to change a spatial distribution of first ports coupled to a first data stream interface.

In some, but not necessarily all examples, the switching arrangement is configured to change a spatial distribution of second ports coupled to a second data stream interface.

In some, but not necessarily all examples, the apparatus comprises a controller configured to vary the flexible, exclusive groups of first ports coupled to first data stream interfaces to adapt a relative gain between the first data stream interfaces.

In some, but not necessarily all examples, the apparatus comprises a controller configured to vary the flexible, exclusive groups of second ports coupled to second data stream interfaces to adapt a relative gain between the second data stream interfaces.

In some, but not necessarily all examples, the switching arrangement is configured to couple different groups of multiple first ports for antenna elements to different first data stream interfaces, wherein each first port in the groups of multiple first ports is coupled to only a single first data stream interface and different groups of multiple second ports for antenna elements to different second data stream interfaces, wherein each second port in the groups of multiple second ports is coupled to only a single second data stream interface.

In some, but not necessarily all examples, the first data stream interfaces and the first ports for antenna elements are associated with a first polarization of the antenna elements and wherein the second data stream interfaces and the second ports for antenna elements are associated with a second polarization of the antenna elements, wherein the first and second polarizations are orthogonal.

In some, but not necessarily all examples, the antenna elements are dual polarized antenna elements, wherein an antenna element has at least a first port associated with a first polarization and a second port associated with a second polarization.

In some, but not necessarily all examples, the switching arrangement is configured to couple the first port of the dual polarized antenna element to a first data stream interface and to couple the second port of the dual polarized antenna element to a second data stream interface.

In some, but not necessarily all examples, the switching arrangement is configured to couple:
a first port to only one selected data stream interface;
a different first port to only one selected data stream interface;
wherein the selected data stream interface, coupled to the first port, and the selected data stream interface, coupled to the different first port, are selected to be the same data stream interface or the selected data stream interface, coupled to the first port, and the selected data stream interface, coupled to the different first port, are selected to be different data stream interfaces.

In some, but not necessarily all examples, the switching arrangement is configured to couple any one of the first data stream interfaces to any group of first ports and is configured to couple any one of the second data stream interfaces to any group of second ports.

In some, but not necessarily all examples, the apparatus comprises a first set of parallel first switches wherein there is a first switch associated with each first port, wherein each first switch comprises a single pole associated with the respective first port and a plurality of throws wherein each throw is associated with a different first data stream interface and
a second set of parallel second switches wherein there is a second switch associated with each second port, wherein each second switch comprises a single pole associated with the respective second port and a plurality of throws wherein each throw is associated with a different second data stream interface

In some, but not necessarily all examples, the apparatus is configured to use each first data stream interface and each second data stream interface for a different multiple-input multiple-output layer.

In some, but not necessarily all examples, the apparatus is configured to use first data stream interfaces for component carriers used for carrier aggregation and configured to use second data stream interfaces for component carriers used for carrier aggregation.

In some, but not necessarily all examples, at least transmission paths from first ports to the switching arrangement comprise circuitry configured for beam-forming and/or amplification and/or wherein at least transmission paths from second ports to the switching arrangement comprises circuitry configured for beam-forming and/or amplification.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of an apparatus 10;
FIG. 2 shows an example of an apparatus 10 and the flexibility of the switching arrangement at coupling groups of ports 32 to data stream interfaces 22;
FIG. 3 shows an example of an apparatus 10 and the exclusivity of groups of ports 32 coupled to data stream interfaces 22 by the switching arrangement 40;
FIG. 4 shows an example of an apparatus 10 that comprises a switching arrangement 40 that uses parallel switches 42 to selectively couple a port 32 to only one data interface 22;
FIG. 5 shows an example of an apparatus 10 that comprises a switching arrangement 40 that uses parallel switches 42 to selectively couple a port 32 of a dual polarized antenna element to only one data interface 22;
FIG. 6 shows an example of a component of the apparatus 10 illustrated in FIG 5;
FIG. 7 shows an example of a component of the apparatus 10 illustrated in FIG 5;
FIG. 8A & 8B show a change in switching configuration of the switching arrangement that maintains four 2x2 MIMO data streams but changes the number of antenna ports used for each 2x2 MIMO data stream.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index and an instance of the class (member of the set) can be referenced using a reference number with a particular subscript index.

### TERMINOLOGY

The terms 'CoPol' and 'CrossPol' or the terms 'Horizontal' (H) and 'Vertical' (V) are used to refer to two mutually orthogonal linear polarizations. The terms first linear polarization and second linear polarization can be used instead with the understanding that the first linear polarization and the second linear polarization are orthogonal. The use of the terms 'CoPol' and 'CrossPol' or the terms 'H' and 'V' therefore implies linear polarization and orthogonality. However, it does not necessarily imply any defined reference polarization direction (for example, an antenna under test polarization) that is aligned with CoPol and orthogonal to CrossPol.

The terms CoPol and CrossPol and the terms V and H are, for example, used to refer to two orthogonal feeds of an antenna, as the feeds are always orthogonal, independent of the orientation of the device.

### DETAILED DESCRIPTION

The FIGs illustrate various examples of an apparatus 10 comprising:
first data stream interfaces 22_1;
second data stream interfaces 22_2;
first ports 32_1 for antenna elements;
second ports 32_2 for antenna elements;
a switching arrangement 40 configured to couple:
   flexible, exclusive groups 34_1 of first ports 32_1 to first data stream interfaces 22_1 and
   flexible, exclusive groups 34_2 of second ports 32_2 to second data stream interfaces 22_2.

A group 34 of ports 32 is exclusive if the ports 32 in that group 34 are not in another group of ports 32. A port 32 cannot be in two exclusive groups 34. Exclusive groups 34 do not overlap and have no members in common. Thus a group 34_1 of first ports 32_1 is exclusive if the first ports 32_1 in that group 34_1 are not in another group 34_1 of first ports 32_1. A first port 32_1 cannot be in two exclusive groups 34_1 of first ports 32_1. A group 34_2 of second ports 32_2 is exclusive if the second ports 32_2 in that group 34_2 are not in another group 34_2 of second ports 32_2. A second port 32_2 cannot be in two exclusive groups 34_2 of second ports 32_2.

Flexibility in relation to an exclusive group 34 means that the members of the group 34 can change, however, exclusivity is maintained. The number of members and/or the identity of the members is flexible (changeable). However, exclusivity is maintained. Therefore a member of one group 34 can move to another group 34 but a member of one group 34 cannot be shared with another group. Therefore a port 32 can only be coupled to one data stream interface 22.

In some examples, the first data stream interfaces 22_1 are associated with a first polarization and the second data stream interfaces 22_2 are associated with a second polarization that is orthogonal to the first polarization. In some examples, the first data stream interfaces 22_1 are associated with a first linear polarization, indicated in some examples as CoPol or V. In some examples, the second data stream interfaces 22_2 are associated with a second linear polarization, indicated in these examples as CrossPol or H. It should be appreciated that in other examples, the first data stream interfaces 22_1 could be indicated as CrossPol or H and the second data stream interfaces 22_2 indicated as CoPol or V.

The apparatus 10 can be a module for a radio transceiver apparatus. The apparatus 10 can be a module for terminal radio transceiver apparatus for a cellular radio communications network. For example, the apparatus 10 can be a module for a user equipment.

The apparatus 10 can be a radio transceiver apparatus. The apparatus 10 can be a terminal radio transceiver apparatus for a cellular radio communications network. For example, the apparatus 10 can be a user equipment.

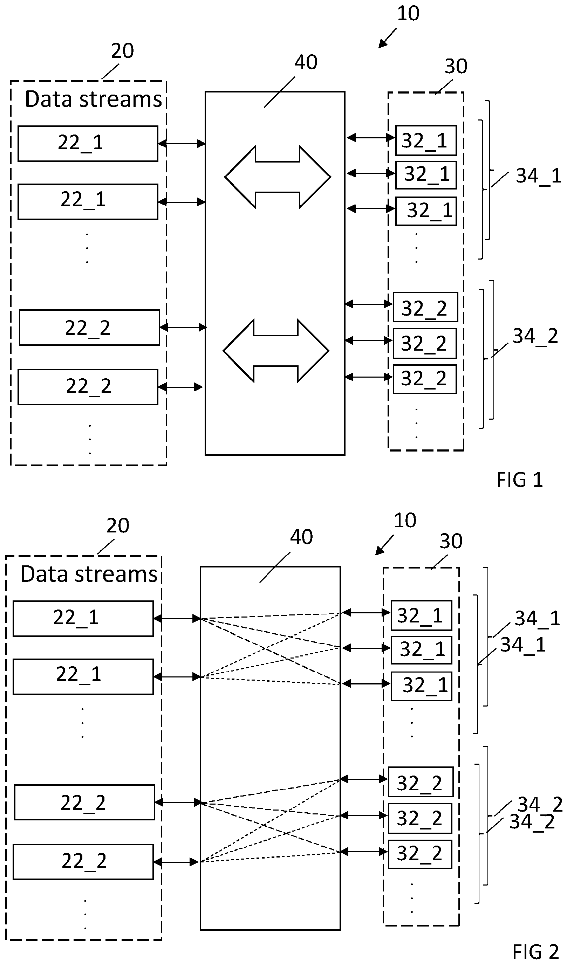

FIG 1 illustrates an example of an apparatus 10 comprising:
first data stream interfaces 22_1;
second data stream interfaces 22_2;
first ports 32_1 for antenna elements;
second ports 32_2 for antenna elements;
a switching arrangement 40 configured to couple:
   flexible, exclusive groups 34_1 of first ports 32_1 to first data stream interfaces 22_1 and
   flexible, exclusive groups 34_2 of second ports 32_2 to second data stream interfaces 22_2.

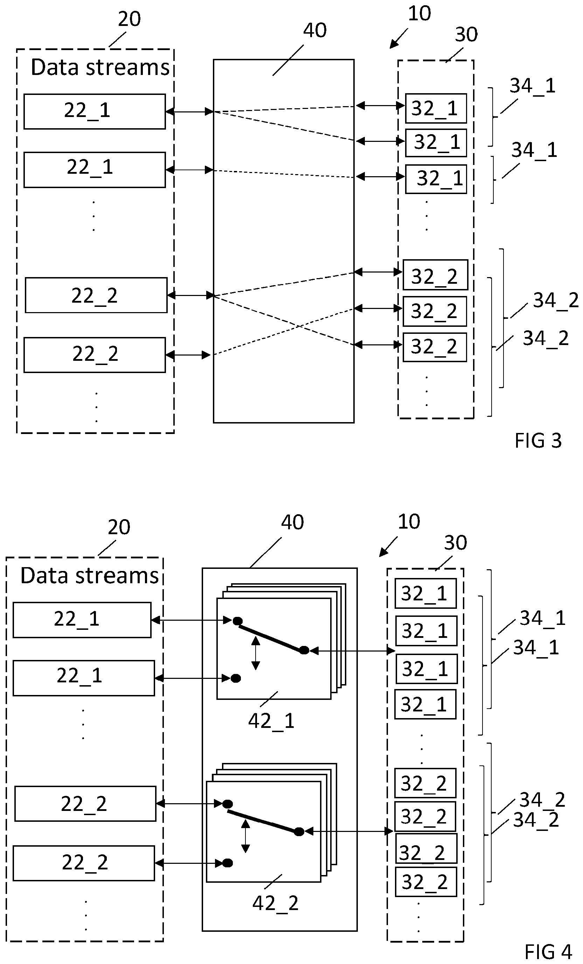

As illustrated in FIG 2 & 3, the switching arrangement 40 is configured to couple different flexible, exclusive groups 34_1 of first ports 32_1 to each of at least some of the first data stream interfaces 22_1 and to couple different flexible, exclusive groups 34_2 of second ports 32_2 to each of at least some of the second data stream interfaces 22_2.

For example if there are N1 first data stream interfaces 22_1 of which M1 (M1≤N1) are used, then each of the M1 first data stream interfaces 22_1 is coupled to a different exclusive group 34_1 of first ports 32_1. Each exclusive groups 34_1 is flexible in composition but not exclusivity.

For example if there are N2 second data stream interfaces 22_2 of which M2 (M2≤N2) are used, then each of the M2 second data stream interfaces 22_2 is coupled to a different exclusive group 34_2 of second ports 32_2. Each exclusive groups 34_2 is flexible in composition but not exclusivity.

The designation of a data stream interface 22 as a first data stream interfaces 22_1 or a second data stream interfaces 22_2 can be flexible.

The designation of a port 32 as a first ports 32_1 or a second ports 32_2 can be flexible.

FIG. 2 shows an example of an apparatus 10 and the flexibility of the switching arrangement at coupling groups of ports 32 to data stream interfaces 22. As illustrated in FIG 2, in at least some examples, the switching arrangement 40 is configured to couple any one of the first data stream interfaces 22_1 to any group 34_1 of first ports 32_1 and configured to couple any one of the second data stream interfaces 22_2 to any group 34_2 of second ports 32_2.

FIG 2 illustrates the flexibility (but not the exclusivity) of the switching arrangement 40. While FIG 2 does not illustrate the exclusivity of the groups 34_1 of first ports 32_1 or the exclusivity of the groups 34_2 of second ports 32_2 they are exclusive as illustrated in FIG 3.

FIG. 3 shows an example of an apparatus 10 and the exclusivity of groups of ports 32 coupled to data stream interfaces 22 by the switching arrangement 40. FIG 3 illustrates the exclusivity (but not the flexibility) of the switching arrangement 40. FIG 3 illustrates the exclusivity of the groups 34_1 of first ports 32_1 and the exclusivity of the groups 34_2 of second ports 32_2.

FIG 2 illustrates a potentiality of switching configurations of the switching arrangement 40, that is a possibility of states before switching. FIG 3 illustrates a particular switching configuration of the switching arrangement 40, that is a state after switching.

The configuration of the switching arrangement 40 illustrated in FIG 3 couples an exclusive group 34_1 of first ports 32_1 to first data stream interfaces 22_1 and an exclusive group 34_2 of second ports 32_2 to second data stream interfaces 22_2.

Flexibility in the exclusive groups 34_1 of first ports 32_1 can be achieved by changing the number of first ports 32_1 in any exclusive group 34_1. The switching arrangement 40 is configured to change a number of first ports 32_1 that are coupled to a first data stream interface 22_1.

Flexibility in the exclusive groups 34_2 of second ports 32_2 can be achieved by changing the number of second ports 32_2 in any exclusive group 34_2. The switching arrangement 40 is configured to change a number of second ports 32_2 that are coupled to a second data stream interface 22_2.

In at least some examples, a controller (not illustrated in this FIG) is configured to vary the flexible, exclusive groups 34_1 of first ports 32_1 coupled to first data stream interfaces 22_1 to adapt a relative gain between the first data stream interfaces 22_1. An increase in gain can be achieved by increasing the number of first ports 32_1 in a group 34_1 used for a particular first data stream interface 22_1. A decrease in gain can be achieved by decreasing the number of first ports 32_1 in a group 34_1 used for a particular first data stream interface 22_1.

In at least some examples, a controller (not illustrated in this FIG) is configured to vary the flexible, exclusive groups 34_2 of second ports 32_2 coupled to second data stream interfaces 22_2 to adapt a relative (antenna) gain of the second data stream interfaces 22_2. An increase in gain can be achieved by increasing the number of second ports 32_2 in a group 34_2 used for a particular second data stream interface 22_2. A decrease in gain can be achieved by decreasing the number of second ports 32_2 in a group 34_2 used for a particular second data stream interface 22_2 Flexibility in the exclusive groups 34_1 of first ports 32_1 can be achieved by changing the identity of the first ports 32_1 in any exclusive group 34_1. The switching arrangement 40 is configured to change which of the first ports 32_1 are coupled to a first data stream interface 22_1. The switching arrangement 40 is configured to change which first data stream interface 22_1 is coupled to a first port 32_1.

Flexibility in the exclusive groups 34_2 of second ports 32_2 can be achieved by changing the identity of the second ports 32_2 in any exclusive group 34_2. The switching arrangement 40 is configured to change which of the second ports 32_2 are coupled to a second data stream interface 22_2. The switching arrangement 40 is configured to change which second data stream interface 22_2 is coupled to a second port 32_2.

When antenna elements are spatially distributed, the selection of which ports 32 are coupled to which data stream interfaces 22 can change a spatial distribution of ports coupled to a particular data stream interface 22.

As illustrated in FIG 3, in at least some examples, the switching arrangement 40 is configured to couple different groups of multiple first ports 32_1 for antenna elements to different first data stream interfaces 22_1, wherein each first port 32_1 in the groups 34_1 of multiple first ports 32_1 is coupled to only a single first data stream interface 22_1.

As illustrated in FIG 3, in at least some examples, the switching arrangement 40 is configured to couple different groups of multiple second ports 32_2 for antenna elements to different second data stream interfaces 22_2, wherein each second port 32_2 in the groups 34_2 of multiple second ports 32_2 is coupled to only a single second data stream interface 22_2.

In FIG 3, the switching arrangement 40 is configured to couple
a first port 32_1 to only one selected first data stream interface 22_1;
a different first port 32_1 to only one selected data stream interface 22_1;
wherein the selected data stream interface 22_1, coupled to the first port 32_1, and the selected data stream interface 22_1, coupled to the different first port 32_1, are selected to be the same data stream interface 22_1 or the selected data stream interface 22_1, coupled to the first port 32_1, and the selected data stream interface 22_1, coupled to the different first port 32_1, are selected to be different data stream interfaces 22_1.

In FIG 4 each of the first ports 32_1 is associated with a first switch 42_1 in the switching arrangement 40. The first switch 42_1 is an exclusive switch. It selects which one of the first data stream interfaces 22_1 is coupled to its associated first port 32_1.

In some examples the first switch 42_1 has N1 different, exclusive states. Each state is associated with the coupling of one and only one of the N1 first data stream interfaces 22_1 to the associated first port 32_1.

In the FIG, for clarity, only one of the first switches 42_1 is illustrated and N1 is limited to 2.

In FIG 4 each of the second ports 32_2 is associated with a second switch 42_2 in the switching arrangement 40. The second switch 42_2 is an exclusive switch. It selects which one of the second data stream interfaces 22_2 is coupled to its associated second port 32_2.

In some examples the second switch 42_2 has N2 different, exclusive states. Each state is associated with the coupling of one and only one of the N2 second data stream interface 22_2 to the associated second port 32_2.

In the FIG, for clarity, only one of the second switches 42_2 is illustrated and N2 is limited to 2.

It is therefore an inherent feature of this example of the switching arrangement 40 that a port 32 can be coupled to at most one data stream interface 22 (as illustrated in FIG 3).

This switching arrangement 40 can, however, be controlled so that any data stream interface 22 can be coupled to one or more ports 32 (see FIG 3).

In FIG 4 the apparatus 10 comprises a first set of parallel first switches 42_1. There is a first switch 42_1 associated with each first port 32_1. Each first switch 42_1 comprises a single pole associated with the respective first port 32_1 and a plurality of throws wherein each throw is associated with a different first data stream interface 22_1 (CoPol).

In FIG 4 the apparatus 10 comprises a second set of parallel second switches 42_2. There is a second switch 42_2 associated with each second port 32_2. Each second switch 42_2 comprises a single pole associated with the respective second port 32_2 and a plurality of throws wherein each throw is associated with a different second data stream interface 22_2 (CrossPol).

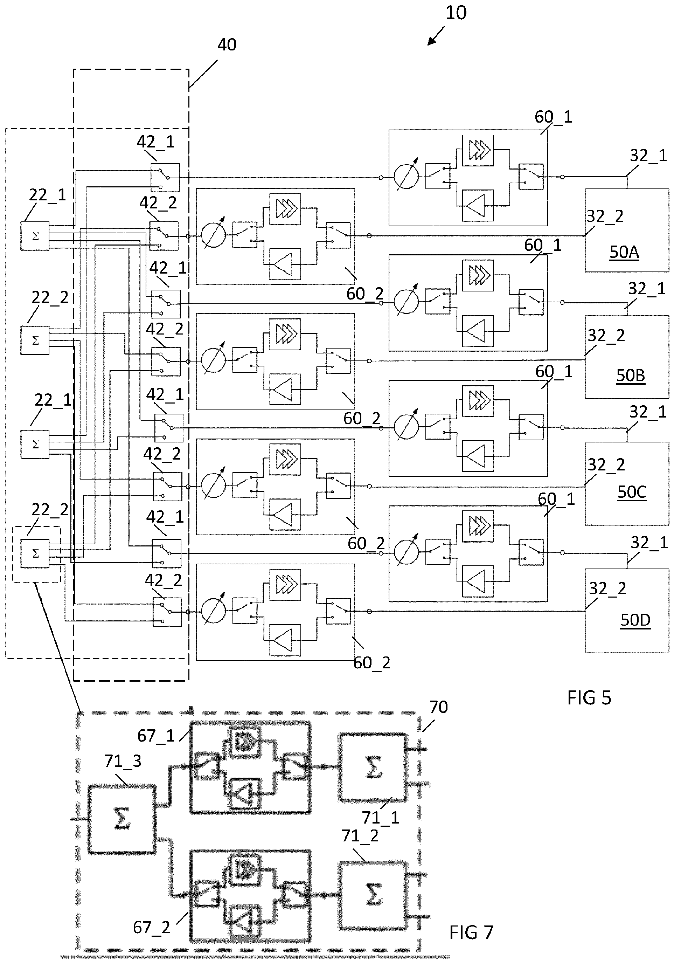

FIG 5 is an example of the apparatus illustrated in FIG 4.

Similarities with FIG 4 are that the apparatus 10 has two first data stream interfaces 22_1 and four first ports 32_1. The switching arrangement 40 has four parallel first switches 42_1 where each first switch 42_1 is associated with a different first port 32_1. Each first switch 42_1 is configured to selectively couple its associated first port 32_1 to one particular first data stream interface 22_1.

The apparatus 10 has two second data stream interfaces 22_2 and four second ports 32_2. The switching arrangement 40 has four parallel second switches 42_2 where each second switch 42_2 is associated with a different second port 32_2. Each second switch 42_2 is configured to selectively couple its associated second port 32_2 to one particular second data stream interface 22_2.

In the example illustrated in FIG 5, the first data stream interfaces 22_1 and the first ports 32_1 for antenna elements 50 are associated with a first polarization of the antenna elements 50. The second data stream interfaces 22_2 and the second ports 32_2 for antenna elements 50 are associated with a second polarization of the antenna elements 50. The first and second polarizations are orthogonal.

In this example, the antenna elements 50 are dual polarized antenna elements 50. Each dual-polarized antenna element 50 has a first port 32_1 (CoPol) associated with the first polarization and a second port 32_2 (CrossPol) associated with the second polarization.

The switching arrangement 40 is configured to couple the first port 32_1 of the dual polarized antenna element 50 to a first data stream interface 22_1 and to couple the second port 32_2 of the dual polarized antenna element 50 to a second data stream interface 22_2. The switching arrangement 40 has, for each dual polarized antenna element 50, a first switch 42_1 dedicated to selective coupling of the first port 32_1 of the dual polarized antenna element 50 to any one of a plurality of first data stream interfaces 22_1, in this example any one of two first data stream interfaces 22_1. The switching arrangement 40 has, for each dual polarized antenna element 50, a second switch 42_2 dedicated to selective coupling of the second port 32_2 of the dual polarized antenna element 50 to any one of a plurality of second data stream interfaces 22_2, in this example any one of two second data stream interfaces 22_2.

In FIG 5, the transmission paths to and reception paths from first ports 32_1 via the switching arrangement 40 comprise circuitry 60_1 configured for beam-forming and/or amplification and the transmission paths to and reception paths from second ports 32_2 via the switching arrangement 40 comprise circuitry 60_2 configured for beam-forming and/or amplification.

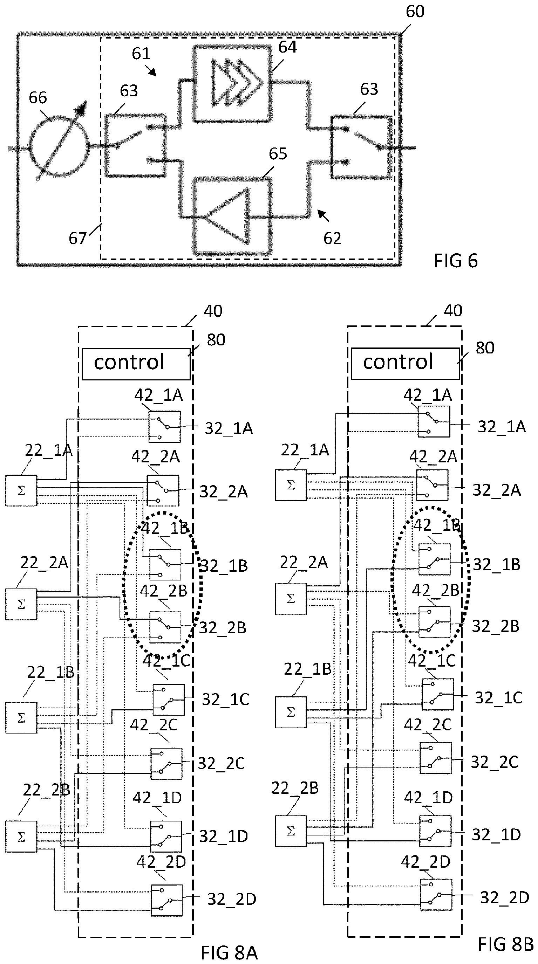

As illustrated in FIG 6, the circuitry 60_1, 60_2 comprises phase control circuitry 66 and amplification circuitry 67. The transmission path 61 comprises phase control circuitry 66 and power amplification circuitry 64. The reception path 62 comprises low noise amplification circuitry 65 and phase control circuitry 66. Switching circuitry 63 is provided to switch between the reception path 62 and the transmission path 61. In this example, the phase control circuitry 66 is common to both the reception path 62 and the transmission path 61. This enables beam-forming at transmission and at reception. In other examples, the phase control circuitry 66 is only present in the transmission path 61. This enables beam-forming at transmission only, not at reception.

In the particular example illustrated in FIG 5, but not necessarily all examples, each of the data stream interfaces 22 comprise combination and conditioning circuitry 70.

At a first data stream interface 22_1, the combination and conditioning circuitry 70 provides an interconnection to each one of the first switches 42_1 associated with respective first ports 32_1. At a second data stream interface 22_2, the combination and conditioning circuitry 70 provides an interconnection to each one of the second switches 42_2 associated with respective second ports 32_2.

The combination and conditioning circuitry 70 comprises pairwise combiners/splitters.

Two of the four interconnections to the four switches 42 (first switches 42_1 for a first data stream interface 22_1; second switches 42_2 for a second data stream interface 22_2) are mapped through a first pairwise combiner/splitter 71_1 to a first single path. The other two of the four interconnections to the four switches 42 (first switches 42_1 for a first data stream interface 22_1; second switches 42_2 for a second data stream interface 22_2) are mapped through a different second pairwise combiner/splitter 71_2 to a different second single path. The first single path and the second single path are mapped through a third pairwise combiner/splitter 71_3 to a single path that couples to the data stream interface 22 (first data stream interface 22_1 or second data stream interface 22_2).

From the perspective of reception, two paths are combined by combiner 71_2 to the second path and two paths are combined by combiner 71_1 to the first path. The first path and the second path are combined by combiner 71_3 to a single path to a data stream interface 22.

From the perspective of transmission, a single path from the data stream interface 22 (first data stream interface 22_1 or second data stream interface 22_2) is split by splitter 71_3 into first and second paths. The first path is split by splitter 71_1 into two paths. The second path is split by splitter 71_2 into two paths.

Conditioning circuitry 67 is present between the different stages of combiners/splitters. That is there is conditioning circuitry 67_1 between the first pairwise combiner/splitter 71_1 and the third pairwise combiner/splitter 71_3 and there is conditioning circuitry 67_2 between the second pairwise combiner/splitter 71_2 and the third pairwise combiner/splitter 71_3.

The conditioning circuitry 67_1, 67_2 comprises switches for selecting between transmission and reception. The transmission paths comprise power amplification circuitry. The reception paths comprise low noise amplification circuitry.

FIGs 8A and 8B illustrates how the apparatus 10, illustrated in FIG 5 can be controlled during use.

In this example, the apparatus 10 comprises a controller 80. The controller 80 can be part of the switching arrangement 40 or separate from the switching arrangement 40.

The apparatus 10 has two first data stream interfaces 22_1A, 22_1B and four first switches 42_1A, 42_1B, 42_1C, 42_1D associated with four respective first ports 32_1A, 32_1B, 32_1C, 32_1D of the four antenna elements 50A, 50B, 50C, 50D (not illustrated in this FIG but illustrated in FIG 5).

The apparatus 10 has two second data stream interfaces 22_2A, 22_2B and four second switches 42_2A, 42_2B, 42_2C, 42_2D associated with four respective second ports 32_2A, 32_2B, 32_2C, 32_2D of the antenna elements 50A, 50B, 50C, 50D (not illustrated in this FIG but illustrated in FIG 5).

The switching arrangement 40 has four parallel first switches 42_1A, 42_1B, 42_1C, 42_1D where each first switch 42_1A, 42_1B, 42_1C, 42_1D is associated with a respective different first port 32_1A, 32_1B, 32_1C, 32_1D. Each first switch 42_1A, 42_1B, 42_1C, 42_1D is configured to selectively couple its associated first port 32_1A, 32_1B, 32_1C, 32_1D to one particular first data stream interface 22_1A, 22_1B.

The switching arrangement 40 has four parallel second switches 42_2A, 42_2B, 42_2C, 42_2D where each second switch 42_2A, 42_2B, 42_2C, 42_2D is associated with a respective different second port 32_2A, 32_2B, 32_2C, 32_2D. Each second switch 42_2A, 42_2B, 42_2C, 42_2D is configured to selectively couple its associated second port 32_2A, 32_2B, 32_2C, 32_2D to one particular second data stream interface 22_2A, 22_2B.

In FIG 8A, the switching arrangement 40 is controlled by controller 80 to couple as follows:

| First data stream interface | Coupled to first ports: | Coupled to # ports |
|---|---|---|
| 22_1A | 32_1A, 32_1B | 2 |
| 22_1B | 32_1C, 32_1D | 2 |

| Second data stream interface | Coupled to second ports: | Coupled to # ports |
|---|---|---|
| 22_2A | 32_2A, 32_2B | 2 |
| 22_2B | 32_2C, 32_2D | 2 |

In FIG 8B, the switching arrangement 40 is controlled by controller 80 to couple as follows:

| First data stream interface | Coupled to first ports: | Coupled to # ports |
|---|---|---|
| 22_1A | 32_1A | 1 |
| 22_1B | 32_1B, 32_1C, 32_1D | 3 |

| Second data stream interface | Coupled to second ports: | Coupled to # ports |
|---|---|---|
| 22_2A | 32_2A | 1 |
| 22_2B | 32_2B, 32_2C, 32_2D | 3 |

The state of the switch 42_1B has changed to connect first port 32_1B to the first data stream interface 22_1B (FIG 8B) instead of the first data stream interface 22_1A (FIG 8A).

The state of the switch 42_2B has changed to connect second port 32_2B to the first data stream interface 22_2B (FIG 8B) instead of the second data stream interface 22_2A (FIG 8A).

The flexible, exclusive group 34_2 of second ports 32_2 coupled to second data stream interface 22_2A has been varied between {32_2A, 32_2B} in FIG 8A and {32_2A} in FIG 8B. The flexible, exclusive group 34_2 of second ports 32_2 coupled to second data stream interface 22_2B has been varied between {32_2C, 32_2D} in FIG 8A and {32_2B, 32_2C, 32_2D} in FIG 8B.

The flexible, exclusive group 34_1 of first ports 32_1 coupled to first data stream interface 22_1A has been varied between {32_1A, 32_1B} in FIG 8A and {32_1A} in FIG 8B. The flexible, exclusive group 34_1 of first ports 32_1 coupled to first data stream interface 22_1B has been varied between {32_1C, 32_1D} in FIG 8A and {32_1B, 32_1C, 32_1D} in FIG 8B.

The switching arrangement 40 is controlled by controller 80 to change a spatial distribution of first ports 32_1 coupled to a first data stream interface 22_1 and to change a spatial distribution of second ports 32_2 coupled to a second data stream interface 22_2.

The spatial distribution of first ports (or second ports) means that there is a consequential spatial distribution of antenna elements (which leads to the different antenna radiation patterns). It is the antenna elements/radiators and their relative physical position which when selected determine the resultant radiation pattern.

The switching arrangement 40 is controlled by controller 80 to vary the flexible, exclusive groups 34_1 of first ports 32_1 coupled to first data stream interfaces 22_1 to adapt a relative antenna gain between the first data stream interfaces.

In FIG 8B, the first data stream interface 22_1A is associated with a single first port 32_1 whereas in FIG 8A, the first data stream interface 22_1A is associated with two first ports 32_1. This represents a change in antenna gain.

In FIG 8B, the first data stream interface 22_1B is associated with three first ports 32_1 whereas in FIG 8A, the first data stream interface 22_1B is associated with two first ports 32_1. This represents a change in antenna gain.

The switching arrangement 40 is controlled by controller 80 to vary the flexible, exclusive groups of second ports 32_2 coupled to second data stream interfaces 22_2 to adapt a relative antenna gain between the second data stream interfaces 22_2.

In FIG 8B, the second data stream interface 22_2A is associated with a single second port 32_2 whereas in FIG 8A, the second data stream interface 22_2A is associated with two second ports 32_2. This represents a change in antenna gain.

In FIG 8B, the second data stream interface 22_2B is associated with three second ports 32_2 whereas in FIG 8A, the second data stream interface 22_2B is associated with two second ports 32_2. This represents a change in antenna gain.

The apparatus 10 described in any of the preceding examples can be used for multiple-input multiple-output (MIMO). Each first data stream interface 22_1 and each second data stream interface 22_2 can be used for a different multiple-input multiple-output layer.

The apparatus 10 described in any of the preceding examples can be used for carrier aggregation. The data stream interfaces 22 can be used for carrier aggregation. The first data stream interfaces 22_1 can be used for component carriers used for carrier aggregation. The second data stream interfaces 22_2 can be used for component carriers used for carrier aggregation.

Previously mmwave modules used in user equipment (UE) have two polarizations of the patch antennas and combine all paths from/to each patch element to the same transmit/receive data interface.

In contrast, the apparatus 10 can be used in a reconfigurable multi-purpose mmwave antenna system operable in at least a FR2 frequency range 24.5Ghz - 42Ghz. The apparatus 10 can be provided as a single hardware module.

The apparatus 10 enables multi-reception (Rx) chain simultaneous downlink (DL) reception by a UE. The apparatus 10 enables multi-beam simultaneous downlink (DL) reception by a UE.

The apparatus 10 enables 4 layer DL-MIMO at a UE. There are two data streams 22 per polarization, that are selectively coupled to exclusive groups of antenna ports 32. Four antenna ports 32 are available to each of the four data streams 22 (four MIMO layers).

The apparatus 10 enables carrier aggregation (CA) at the UE. The apparatus 10 enables multi-Rx chain/beam simultaneous DL reception on a single component carrier (single data stream 22). This enables IBM (Independent Beam Management) carrier aggregation where the UE selects its DL Rx beam(s) for each component carrier based on DL reference signal measurements made. The UE can use more than 1 receive chain (antenna port 32) for each component carrier (data stream interface 22).

The apparatus 10 has various advantages:
Enables reconfiguration of the receive chain for support of each single antenna element of an antenna array;
Reconfiguration allows all MIMO layer assignments to individual antenna elements to be split independently between orthogonal polarizations;
Reconfigurability allows antenna gain differentiation between the MIMO layers by using different numbers of antenna ports per layer;
Reconfiguration allows same antenna gain and beam alignment advantages of MIMO onto carrier aggregation configurability;
Antenna arrays may be used either for MIMO or for Carrier aggregation (Intra- and Inter band) on the same mmwave module;
Larger size antenna array structures can support reconfigurations that include both MIMO and CA through further expansions of the architecture provided.

The apparatus provides a single mmwave module for 4 layer DL MIMO and/or FR2 CA support.

First data stream interfaces 22_1 (e.g. Two V-polarization receive chains) and second data stream interfaces 22_2 (e.g. Two H-polarization receive chains may receive/transmit to any of the antenna elements 50 depending on the switch states.

FIGs 5 and 8A & 8B illustrate 2x2 MIMO. In FIG 8A, there is an assignment of two antenna elements (two antenna ports 32) for each of the four 2x2 MIMO layer. Moving from FIG 8A to FIG 8B, first 2x2 MIMO layers (data stream interfaces 22_1A, 22_2A) are reduced in amplification/number of antenna ports 32 from two antenna ports 32 to one antenna port. The second 2x2 MIMO layers (data stream interfaces 22_1B, 22_2B) are increased in amplification/number of antenna ports 32 from two antenna ports 32 to three antenna ports 32. This provides a significant boost in antenna gain through an additional amplification stage on both polarizations plus an additional antenna element.

The reconfiguration can be used for increasing the signal strength of the second 2x2 MIMO layers (data stream interfaces 22_1B, 22_2B) increasing the signal-to-noise ratio (SNR), but at the expense of the performance and signal strength achieved at the first 2x2 MIMO layers (data stream interfaces 22_1A, 22_2A).

The architecture allows a variety of combinations towards the 4 independent streams. It can split a single antenna element 50 between streams.

The architecture and configurability are limited to 4 elements for the visualization and explanation, but it is obvious how an antenna array scaled in elements allow for additional conversion paths enabling MIMO and CA operation in parallel.

The configurability to assign each element of the array to a data stream interface 22 (MIMO layer or CA CC) allows the freedom to reconfigure the antenna array according to the network configuration along with adaptions to link level qualities. The controller 80 can balance the individual gain of each data stream interface 22 by controlling via the switching arrangement 40 the number of antenna ports coupled to the data stream interface.

The antenna elements can have dual resonance or intra-band (contiguous or non-contiguous) carrier aggregation can be within a single resonance of the antenna elements.

Each data stream interface 22 can be associated with independent frequency conversion circuitry (independent mixers).

Each intermediate frequency (IF) frequency conversion circuit associated with a data stream interface 22 may benefit from individual local oscillator (LO) assignment, but in case of 4 layer DL-MIMO all of these converters would use the same LO frequency. By assigning two phase-locked loops (PLLs) to each polarization pair (V+H pair), the IF frequency of the mmwave module may be run at two frequencies, and the apparatus 10 assigns the antenna elements 50 for each operational frequency. This supports FR2 IBM CA concepts.

Additionally the UE may have calibration or pre-characterization data that contains information of gain delta relative to the array configurations. The UE will use this data to balance the SNR and Gain for MIMO or CA configuration.

Imbalance between the streams or carriers may force-trigger a change in the allocation of antenna ports to data streams through assignment of more antenna ports to the data stream of the least input power to the UE, from the group of antenna ports previously coupled to the data stream exhibiting the strongest signal. The result of the reconfiguration will be identifiable in the signal level reports of the UE to the network.

In some examples the antenna elements may be separate distinct antenna elements, one for vertical/co-polar polarization and one for horizontal/cross-polar polarization. In some examples the antenna elements may be a patch antenna element with both vertical/co-polar polarization and horizontal/cross-polar polarization.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
first data stream interfaces;
second data stream interfaces;
first ports for antenna elements;
second ports for antenna elements;
a switching arrangement configured to couple:
flexible, exclusive groups of first ports to first data stream interfaces and flexible, exclusive groups of second ports to second data stream interfaces.

2. An apparatus as claimed in claim 1, wherein the switching arrangement configured to couple: different flexible, exclusive groups of first ports to each of at least some of the first data stream interfaces and different flexible, exclusive groups of second ports to each of at least some of the second data stream interfaces.

3. An apparatus as claimed in claim 1 or 2, wherein the switching arrangement is configured to change a number of first ports coupled to a first data stream interface.

4. An apparatus as claimed in any preceding claim, wherein the switching arrangement is configured to change a number of second ports coupled to a second data stream interface and/or wherein the switching arrangement is configured to change a spatial distribution of first ports coupled to a first data stream interface and/or wherein the switching arrangement is configured to change a spatial distribution of second ports coupled to a second data stream interface.

5. An apparatus as claimed in any preceding claim, comprising a controller configured to vary the flexible, exclusive groups of first ports coupled to first data stream interfaces to adapt a relative gain between the first data stream interfaces and/or configured to vary the flexible, exclusive groups of second ports coupled to second data stream interfaces to adapt a relative gain between the second data stream interfaces.

6. An apparatus as claimed in any preceding claim, wherein the switching arrangement is configured to couple different groups of multiple first ports for antenna elements to different first data stream interfaces, wherein each first port in the groups of multiple first ports is coupled to only a single first data stream interface and different groups of multiple second ports for antenna elements to different second data stream interfaces, wherein each second port in the groups of multiple second ports is coupled to only a single second data stream interface.

7. An apparatus as claimed in any preceding claim, wherein the first data stream interfaces and the first ports for antenna elements are associated with a first polarization of the antenna elements and wherein the second data stream interfaces and the second ports for antenna elements are associated with a second polarization of the antenna elements, wherein the first and second polarizations are orthogonal.

8. An apparatus as claimed in claim 7, wherein the antenna elements are dual polarized antenna elements, wherein an antenna element has at least a first port associated with a first polarization and a second port associated with a second polarization.

9. An apparatus as claimed in claim 8, wherein the switching arrangement is configured to couple the first port of the dual polarized antenna element to a first data stream interface and to couple the second port of the dual polarized antenna element to a second data stream interface.

10. An apparatus as claimed in any preceding claim, wherein the switching arrangement is configured to couple:
a first port to only one selected data stream interface;
a different first port to only one selected data stream interface;
wherein the selected data stream interface, coupled to the first port, and the selected data stream interface, coupled to the different first port, are selected to be the same data stream interface or the selected data stream interface, coupled to the first port, and the selected data stream interface, coupled to the different first port, are selected to be different data stream interfaces.

11. An apparatus as claimed in any preceding claim, wherein the switching arrangement is configured to couple any one of the first data stream interfaces to any group of first ports and is configured to couple any one of the second data stream interfaces to any group of second ports.

12. An apparatus as claimed in any preceding claim, comprising a first set of parallel first switches wherein there is a first switch associated with each first port, wherein each first switch comprises a single pole associated with the respective first port and a plurality of throws wherein each throw is associated with a different first data stream interface
and
a second set of parallel second switches wherein there is a second switch associated with each second port, wherein each second switch comprises a single pole associated with the respective second port and a plurality of throws wherein each throw is associated with a different second data stream interface

13. An apparatus as claimed in any preceding claim, configured to use each first data stream interface and each second data stream interface for a different multiple-input multiple-output layer and/or configured to use first data stream interfaces for component carriers used for carrier aggregation and configured to use second data stream interfaces for component carriers used for carrier aggregation.

14. An apparatus as claimed in any preceding claim, wherein at least transmission paths from first ports to the switching arrangement comprise circuitry configured for beam-forming and/or amplification and/or wherein at least transmission paths from second ports to the switching arrangement comprises circuitry configured for beam-forming and/or amplification.

15. A user equipment comprising the apparatus as claimed in any preceding claim.
